# EUROPÄISCHE PATENTSCHRIFT

(11) **EP 2 917 985 B1**
(45) Veröffentlichungstag und Bekanntmachung des Hinweises auf die Patenterteilung: **27.05.2020**
(21) Anmeldenummer: 13792589.7
(22) Anmeldetag: 07.11.2013
(51) Int. Cl.: H01S 3/094, H01S 3/0941, H01S 3/06, H01S 3/08

(54) **OPTISCH ENDGEPUMPTER SLAB-VERSTÄRKER MIT VERTEILT ANGEORDNETEN PUMPMODULEN**
OPTICALLY END-PUMPED SLAB AMPLIFIER COMPRISING PUMP MODULES ARRANGED IN A DISTRIBUTED MANNER
AMPLIFICATEUR OPTIQUE SLAB À POMPAGE PAR EXTRÉMITÉ AVEC MODULES DE POMPAGE DISTRIBUÉS

(30) Priorität: 09.11.2012 DE 102012022068
(43) Veröffentlichungstag der Anmeldung: 16.09.2015
(73) Patentinhaber: Fraunhofer Gesellschaft zur Förderung der angewandten Forschung e.V., 80686 München (DE); RWTH Aachen, 52062 Aachen (DE)
(72) Erfinder: RUSSBÜLDT, Peter, 52134 Herzogenrath (DE); ROTARIUS, Guido, 6291 GB Vaals (NL); SARTORIUS, Thomas, 52070 Aachen (DE); WEITENBERG, Johannes, 52070 Aachen (DE)
(74) Vertreter: Gagel, Roland
(86) Internationale Anmeldenummer: PCT/EP2013/003350
(87) Internationale Veröffentlichungsnummer: WO 2014/072055

(56) Entgegenhaltungen:
- EP-A1- 1 315 257
- WO-A1-00/74185
- US-A- 5 249 196
- US-A- 5 325 390

## Beschreibung

### Technisches Anwendungsgebiet

Die vorliegende Erfindung betrifft einen optisch endgepumpten Verstärker und/oder Oszillator, der ein plattenförmiges optisches Verstärkungsmedium, das durch zwei sich gegenüberliegende Hauptflächen und jeweils zwei sich gegenüberliegende erste und zweite Seitenflächen begrenzt ist, und mehrere Pumplasereinheiten zum optischen Pumpen des Verstärkungsmediums durch mindestens eine der ersten Seitenflächen aufweist. Die Pumplasereinheiten richten Pumplaserstrahlung als Strahlenbündel auf mindestens eine erste Seitenfläche und sind so ausgebildet, dass die Pumplaserstrahlung beim Durchtritt durch das Verstärkungsmedium einen langgestreckten Strahlquerschnitt mit einer kurzen und einer parallel zu den Hauptflächen verlaufenden langen Achse aufweist. In Richtung der kurzen Achse propagiert die Pumplaserstrahlung frei durch das Medium ohne die Hauptflächen zu tangieren, das Medium wird partiell endgepumpt. Derartige Verstärker bzw. Oszillatoren sind auch unter den Begriffen InnoSlab-Verstärker in Verbindung mit Spiegeln, die den zu verstärkenden Laserstrahl mehrfach durch das Verstärkungsmedium lenken, oder als InnoSlab-Laser in Verbindung mit einem instabilen Resonator bekannt. Das Verstärkungsmedium wird dabei in der Regel durch einen geeignet dotierten Kristall gebildet.

Ein optisch gepumpter Verstärker mit einem plattenförmigen Verstärkungsmedium bietet viele Vorteile gegenüber anderen Verstärker- bzw. Laserkonzepten. Durch das partielle Endpumpen eines langgestreckten, rechteckigen Querschnitts mit einem Seitenverhältnis größer 1:3, im Folgenden als Linie bezeichnet, wird eine Reduktion thermischer Aberrationen gegenüber einem endgepumpten Stablaser und damit eine gute Strahlqualität bei hohen mittleren Leistungen erreicht. Das gepumpte Volumen ist sehr gut an die Abstrahlcharakteristik von Laserdioden-Barren anpassen. Diese Verstärker ermöglichen die Verstärkung von Laserstrahlung auf hohe mittlere Leistungen bei nahezu beugungsbegrenzter Strahlqualität. Die mittlere Ausgangsleistung lässt sich über die Breite bzw. das Aspektverhältnis des Querschnitts des gepumpten Volumens nahezu beliebig skalieren. Über die beiden großflächigen Hauptflächen des Verstärkungsmediums lässt sich eine effiziente Kühlung des Verstärkungsmediums erreichen.

### Stand der Technik

Bei bekannten Anordnungen zum optischen Pumpen eines plattenförmigen Verstärkungsmediums ist sowohl in Oszillatoren als auch in Verstärkern ein Hybridresonator aus Zylinderspiegeln um das Verstärkungsmedium angeordnet, um die im gepumpten Volumen gespeicherte Energie effizient zu extrahieren. Zusammen mit der sich im Betrieb im Verstärkermaterial ausbildenden homogenen Zylinderlinse ist der Hybridresonator senkrecht zum linienförmig gepumpten Volumen bzw. dem entsprechend langgestreckten Pumpquerschnitt stabil und parallel zur gepumpten Linie instabil. Da als Pumplichtquellen in der Regel Laserdioden-Barren oder Stapel aus mehreren Laserdioden-Barren eingesetzt werden, kann die Richtung senkrecht zur gepumpten Linie auch als Fast-Richtung und die Richtung parallel zur gepumpten Linie auch als Slow-Richtung bezeichnet werden. Mit einem geeigneten Resonatordesign kann nicht nur in Fast-Richtung eine beugungsbegrenzte Strahlqualität erreicht werden, sondern auch in Slow-Richtung. Dies setzt voraus, dass die induzierte thermische Linse im Verstärkermaterial in Slow-Richtung homogen ist. Dies kann durch Homogenisierung der Strahlungsverteilung der zum Pumpen eingesetzten Laserdioden-Barren in Slow-Richtung erreicht werden, bevor sie in das Verstärkungsmedium abgebildet bzw. fokussiert wird.

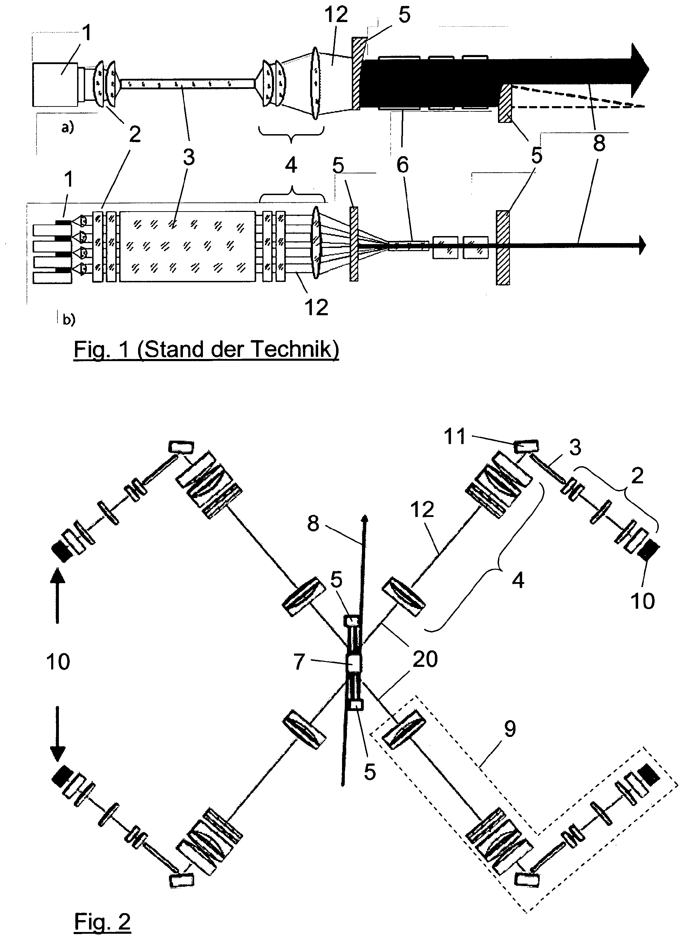

Figur 1 zeigt ein Beispiel für eine derartige Verstärkeranordnung in Draufsicht (Figur 1a) und in Seitenansicht (Figur 1b). Die Pumplichtquelle 1 besteht in diesem Beispiel aus einem Stapel aus Laserdioden-Barren, deren Pumplaserstrahlung über eine Fokussieroptik 2 in einen Homogenisator 3 eingekoppelt wird, der durch einen Wellenleiter realisiert ist. Die am gegenüberliegenden Ende aus dem Homogenisator 3 austretende homogenisierte Pumplaserstrahlung wird dann über eine Pumpoptik 4 durch einen der Resonatorspiegel 5 des Hybridresonators in das Verstärkungsmedium 6, bspw. einen Nd: YVO₄-Kristall, fokussiert. Durch geeignete Ausbildung der Pumplasereinheiten 9 bestehend aus Pumplichtquelle, Fokussieroptik, Homogenisator und Pumpoptik wird ein im Querschnitt linienförmiges Pumpvolumen in dem Verstärkungsmedium 6 gepumpt.

Derartige optisch gepumpte Verstärker, auch unter den Begriffen Innoslab-Laser oder Innoslab-Verstärker bekannt, sind bspw. in der WO 97/029529 A1 oder in der WO 00/74185 A1 beschrieben. Auch die DE 196 17 711 A1 zeigt einen derartigen InnoSlab-Laser bzw. InnoSlab-Verstärker. Die bisher verwendeten Pumpanordnungen für Innoslab-Laser oder Innoslab-Verstärker umfassen einen Laserdioden-Stapel als Pumplichtquelle, eine Fokussieroptik, einen Homogenisator, eine Pumpoptik für die Fokussierung in den Verstärkerkristall und einem dichroitischen Pumpspiegel, um Laser- und Pumplichtstrahlung zu trennen.

Zur Erzeugung der erforderlichen hohen Pumpintensitäten kann jedoch die Homogenisierung und Abbildung der linienförmigen Leistungsdichteverteilung auf die Eintrittsfläche des Verstärkungsmediums optisch sehr aufwändig sein. Der Aufwand für die Pumpoptiken steigt mit wachsender numerischer Apertur und Linienbreite bzw. Aspektverhältnis des Strahlquerschnitts. Dies gilt insbesondere aber nicht ausschließlich für Ytterbium-dotierte Lasermaterialien, die besonders hohe Pumpintensitäten in der Größenordnung 50kW/cm², kleine Linienhöhen << 1mm und kleine Pumplichtdivergenzen in Fast-Richtung erfordern. Im Falle von Innoslab-Lasern bzw. Innoslab-Verstärkern mit Ytterbium-dotierten Laserkristallen, erfordern die bisher realisierten Pumpoptiken den bei weitem größten Anteil am Gesamtaufwand des Laser- bzw. Verstärkersystems. Bei einer technisch gegebenen Brillanz von Laserdioden-Barren (100-200W, etwa 1000mmmrad in slow-Richtung, Stand 2012), kann es zur Erzeugung der notwendigen Pumpintensität im Verstärkungsmedium bzw. Laserkristall erforderlich sein, die Pumplaserstrahlung der Laserdioden-Barren um den Faktor 5 in Slow-Richtung verkleinert in das Verstärkungsmedium abzubilden. Dabei wird die Strahlqualität der Pumplaserstrahlung der Laserdioden-Barren in Fast-Richtung bei der Abbildung erhalten. Die notwendige große numerische Apertur der Abbildung in das Verstärkungsmedium von NA = 0,5 in Slow-Richtung in Verbindung mit dem großen Bildfeld in Slow-Richtung bei Erhaltung der beugungsbegrenzten Strahlqualität in Fast-Richtung kann bspw. für 4 Laserdiodenbarren mit zusammen 600W Pumpleistung insgesamt 2 x 14 Linsen erfordern, so dass die gesamte Optik der Pumplasereinheiten groß und teuer wird. Eine weitere Schwierigkeit besteht im Einfallswinkelbereich der Pumplaserstrahlung auf den zur Trennung der zu verstärkenden Laser- von der Pumplaserstrahlung notwendigen dichroitischen Pumpspiegel. Der große Winkelbereich von bis zu NA 0,5 lässt sich zwar technisch realisieren, allerdings nur auf Kosten einer verkleinerten Zerstörschwelle der dichroitischen Pumpspiegel, die diese Elemente damit zum schwächsten Glied in der Optikkette machen. Weiterhin verhindert der dichroitische Pumpspiegel aufgrund der großen Einfallswinkel das Pumpen mit einer Wellenlänge nahe der Laserwellenlänge, wie bspw. der Zero-Linie von Yb³⁺-Laserionen.

Die US 2004/0052284 A1 beschreibt einen Slab-Laser, bei dem das Verstärkungsmedium als Wellenleiter genutzt wird. Die Pumplaserstrahlung propagiert dabei nicht frei durch das Verstärkungsmedium wie dies bezüglich der kurzen Achse bei einem InnoSlab-Laser bzw. InnoSlab-Verstärker der Fall ist. Auch die WO 2012/014191 A1 betrifft keinen InnoSlab-Laser bzw. InnoSlab-Verstärker mit den entsprechenden Pumpanforderungen, sondern einen Faserlaser, bei dem eine Wellenleitung im Verstärkungsmedium erfolgt. Ein optisches Pumpen von einem Verstärkungsmedium ist auch aus der EP1315257A1 und US5325390A bekannt.

Die Aufgabe der vorliegenden Erfindung besteht darin, eine optische Verstärkeranordnung für einen Innoslab-Laser oder Innoslab-Verstärker mit einem plattenförmigen Verstärkungsmedium anzugeben, die bei gleicher Verstärkerleistung wie die oben beschriebenen Anordnungen des Standes der Technik einen geringeren optischen Aufwand für die Pumplasereinheiten erfordert bzw. eine weitere Leistungsskalierung von bisher etwa 500-1000W auf bis zu 5000W und mehr ermöglicht oder vereinfacht.

### Darstellung der Erfindung

Die Aufgabe wird mit dem optisch gepumpten Verstärker bzw. Oszillator gemäß Patentanspruch 1 gelöst. Vorteilhafte Ausgestaltungen des Verstärkers bzw. Oszillators sind Gegenstand der abhängigen Patentansprüche oder lassen sich der nachfolgenden Beschreibung sowie den Ausführungsbeispielen entnehmen.

Der vorgeschlagene optisch gepumpte Verstärker und/oder Oszillator weist ein plattenförmiges optisches Verstärkungsmedium auf, das durch zwei sich gegenüberliegende Hauptflächen und jeweils zwei sich gegenüberliegende erste und zweite Seitenflächen begrenzt ist. Dieses Verstärkungsmedium kann ein dotierter Laserkristall sein, vorzugsweise ein Ytterbiumdotierter Laserkristall, wie er auch in den vorangehend erläuterten Innoslab-Lasern bzw. Innoslab-Verstärkern eingesetzt wird. Der Verstärker bzw. Oszillator weist mehrere Pumplasereinheiten zum optischen Pumpen des Verstärkungsmediums durch mindestens eine der ersten Seitenflächen auf, über die ein zu verstärkender Laserstrahl durch das Verstärkungsmedium propagiert. Es handelt sich damit bei dem vorgeschlagenen optisch gepumpten Verstärker bzw. Oszillator um einen sog. endgepumpten oder longitudinal gepumpten Verstärker bzw. Oszillator, bei dem die Pumplaserstrahlung im Wesentlichen entlang der Achse der zu verstärkenden Laserstrahlung in das Verstärkungsmedium eingekoppelt wird. Die ersten Seitenflächen, durch die sowohl die Pumplaserstrahlung als auch die zu verstärkende Laserstrahlung in das Verstärkungsmedium ein- bzw. aus dem Verstärkungsmedium austritt, weisen dabei im Wesentlichen einen rechteckigen Querschnitt mit einer größeren Breite als Höhe auf. Die Pumplasereinheiten richten Pumplaserstrahlung als Strahlenbündel auf die mindestens eine erste Seitenfläche und sind so ausgebildet, dass die erzeugte Pumplaserstrahlung beim Durchtritt durch das Verstärkungsmedium einen lang gestreckten Strahlquerschnitt mit einer kurzen und einer parallel zu den Hauptflächen des Verstärkungsmediums verlaufenden langen Achse aufweisen, vorzugsweise einen langgestreckten, rechteckigen Strahlquerschnitt mit einem Seitenverhältnis größer 1:3. Bezüglich der kurzen Achse propagiert die Pumplaserstrahlung dabei frei durch das Medium, wie dies von InnoSlab-Lasern bzw. InnoSlab-Verstärkern bekannt ist, wird also nicht wie in einem Wellenleiter geführt. In Richtung der langen Achse ist die Leistungsdichteverteilung der Pumplaserstrahlung über die Breite des Verstärkungsmediums vorzugsweise zumindest annähernd konstant. Unter einer Pumplasereinheit ist hierbei die Kombination aus Pumplaserquelle und vorgeschalteter Optik zu verstehen, durch die die Pumplaserstrahlung auf das Verstärkungsmedium gerichtet wird. Bei dieser Optik kann es sich bspw. um die Strahlformungsoptik, einen optionalen Homogenisator und die Pumpoptik handeln. Als Pumplaserquellen werden vorzugsweise einzelne oder übereinander gestapelte Laserdioden-Barren eingesetzt. Die typische Ausgangleistung einer Pumplasereinheit liegt im Bereich 100-1000W. Die kurze Achse des Strahlquerschnitts entspricht damit der Fast-Richtung, die lange Achse der Slow-Richtung der Pumplaserstrahlen der Laserdioden-Barren. Die Pumplasereinheiten werden im Folgenden auch als Pumpmodule bezeichnet. Als Pumplaserquellen können auch andere Laser wie bspw. Festkörper-, Faser-, Farbstoff- oder Gaslaser eingesetzt werden. Die Pumplaserstrahlung kann auch über Faserbündel an die Pumpoptik herangeführt werden.

Der vorgeschlagene optisch gepumpte Verstärker bzw. Oszillator zeichnet sich dadurch aus, dass zum einen jeweils mehrere Pumplasereinheiten zum Pumpen durch eine der ersten Seitenflächen oder durch beide ersten Seitenflächen eingesetzt werden. Zum anderen sind die die optischen Achsen der Pumplasereinheiten so angeordnet, dass die Strahlenbündel der Pumplasereinheiten mit ihren Hauptachsen in einer Ebene senkrecht zur kurzen Achse unter einem Winkel zueinander, d.h. nicht parallel zueinander, auf die jeweilige erste Seitenfläche auftreffen und sich dabei die Strahlquerschnitte der Strahlenbündel auf der ersten Seitenfläche überlagern. Das Pumpen kann dabei von einer Seite, d. h. über eine der ersten Seitenflächen oder auch symmetrisch von beiden Seiten, d.h. über beide ersten Seitenflächen erfolgen. Unter der Hauptachse des Strahlenbündels ist dabei die Achse des Schwerpunktes des Strahlenbündels zu verstehen.

Bei der vorgeschlagenen Verstärkeranordnung wird somit der bisher realisierte eine Pumpstrahlengang pro Seite bzw. erster Seitenfläche des Verstärkungsmediums auf N ≥ 2 Strahlengänge bzw. Pumplasereinheiten aufgeteilt, die die Pumplaserstrahlung unter verschiedenen Winkeln in der Ebene parallel zu den Hauptflächen des Verstärkungsmediums auf die jeweilige Seitenfläche richten. Bei gegebener Brillanz der als Pumplichtquelle vorzugsweise verwendeten Laserdioden lässt sich dadurch die numerische Apertur der einzelnen einfallenden Strahlenbündel in Slow-Richtung bzw. in der Ebene parallel zu den Hauptflächen des Verstärkungsmediums auf den N-ten Teil verkleinern. Die numerische Apertur der einfallenden Pumplaserstrahlung ist in Slow-Richtung groß, während sie in Fast-Richtung vernachlässigbar klein ist. Dadurch kann die bildseitig notwendige numerische Apertur der Optik der einzelnen Pumplasereinheiten durch eine Aufteilung auf mehrere Pumplasereinheiten auf den N-ten Teil reduziert werden. Die notwendige Pumpintensität im Verstärkungsmedium wird dann durch die Winkelüberlagerung der N Strahlenbündel der Pumplaserstrahlung erreicht. Dies vereinfacht den optischen Aufbau der einzelnen Pumplasereinheiten aufgrund der kleineren numerischen Apertur deutlich und ermöglicht eine Senkung der Kosten durch den Ersatz einer oder zwei (bei beidseitigem Pumpen) aufwändiger Pumplasereinheiten durch viele kleinere, einfacher aufgebaute, baugleiche und damit rationell fertigbare Pumplasereinheiten. Die Anzahl der optischen Elemente pro Pumplasereinheit lässt sich dadurch senken. In dem in der Beschreibungseinleitung genannten Fall reduziert sich bei einer Verdoppelung der Anzahl Pumpeinheiten auf 4 Pumpeinheiten gemäß Fig.2 die Anzahl der Linsen von 14 auf 10. Gleichzeitig verringern sich der notwendige Durchmesser der Pumpoptiken und die Länge der Strahlwege in den Pumplasereinheiten auf etwa die Hälfte. Dadurch kann die gesamte Pumpanordnung kompakter ausgeführt werden. Ein weiterer Vorteil der vorgeschlagenen Winkelüberlagerung vieler einfacher, gleich aufgebauter Pumplasereinheiten ist die leichte Skalierung zu größeren Breiten der Verstärkermedien bzw. Slab-Kristalle und größeren Pumpleistungen. Mit einer weitgehend standardisierten Pumplasereinheit kann dann aufgrund der Modularität durch die Möglichkeit verschieden viele dieser Pumplasereinheiten bzw. Pumpmodule mit ihren Pumplaserstrahlenbündeln im Winkel zu überlagern eine Laserplattform für unterschiedliche Laserleistungsklassen realisiert werden.

In einer vorteilhaften Ausgestaltung des vorgeschlagenen Verstärkers ist das Verstärkungsmedium zwischen mindestens zwei Spiegeln angeordnet, die den zu verstärkenden Laserstrahl mehrfach durch das Verstärkungsmedium lenken, vorzugsweise auf einer Zickzack-Linie unter Strahlaufweitung in der Ebene parallel zu den Hauptflächen des Verstärkungsmediums. Es kann sich dabei um eine InnoSlab Anordnung handeln, wie sie bereits in der Beschreibungseinleitung erläutert wurde. Die Pumplasereinheiten sind dann beim vorgeschlagenen Verstärker so angeordnet, dass sie das Verstärkungsmedium an den Resonatorspiegeln vorbei pumpen. Damit ist kein Durchgang durch einen der Resonatorspiegel erforderlich, so dass dichroitische Pumpspiegel entfallen können. Dies ermöglicht das Pumpen mit Wellenlängen in direkter Nachbarschaft der Laserwellenlänge (Zero-Line-Pumpen) ohne Einschränkung durch das Design von dichroitischen Pumpspiegeln. So können bspw. Ytterbium-dotierte Laserkristalle auch mit zwei verschiedenen Wellenlängen, z.B. bei 940 nm und 968 nm für Yb:YAG-Kristalle, gepumpt werden und damit durch Wellenlängenüberlagerung die Pumpintensität erhöht werden. Ein Pumpen bei 968 nm ist aufgrund des Spiegeldesigns dichroitischer Pumpspiegel unter Beibehaltung bisheriger Pumpanordnungen gemäß dem Stand der Technik nicht oder nur eingeschränkt möglich. Die Wellenlängenüberlagerung kann dabei unmittelbar am Ort der Pumplaserquellen bzw. Laserdioden erfolgen oder auch erst im Verstärkungsmedium durch zwei getrennte Pumplasereinheiten unterschiedlicher Wellenlänge. Wird über beide ersten Seitenflächen gepumpt, so können sich am Verstärkungsmedium jeweils Pumplasereinheiten unterschiedlicher Wellenlänge gegenüberliegen, um über geeignete dichroitische Spiegel eine Rückfaltung der Pumplaserstrahlung zu erreichen. Das Verstärkungsmedium muss dabei selbstverständlich das Pumpen bei diesen Wellenlängen ermöglichen. Die durch das Verstärkungsmedium propagierte Pumplaserstrahlung der einen Wellenlänge wird dabei über einen im Pumpstrahlengang der gegenüberliegenden Pumplasereinheit angeordneten dichroitischen Spiegel nochmals in das Verstärkungsmedium reflektiert und umgekehrt. Das Gleiche gilt auch für die Polarisation der Pumplaserquellen. Durch Polarisationskopplung am Ort der Pumplaserquellen kann ebenfalls die Pumpintensität erhöht werden. Die Polarisation kann auch wie bei den unterschiedlichen Wellenlängen zum Rückfalten der Pumplaserstrahlung genutzt werden. Auch eine Kombination unterschiedlicher Polarisationen und unterschiedlicher Wellenlängen ist zur Erhöhung der Pumpintensität möglich. Durch die Kombination beider Techniken der unterschiedlichen Polarisation und unterschiedlichen Wellenlänge kann die benötigte numerische Apertur zur Erreichung der erforderlichen Pumpintensität nochmals reduziert werden. Dies reduziert dann wiederum auch den Aufwand für die einzelnen Pumplasereinheiten und stellt einen weiteren erheblichen (impliziten) Vorteil der winkel-überlagerten Pumpanordnung gemäß der vorliegenden Erfindung dar.

In einer bevorzugten Ausgestaltung des vorgeschlagenen Verstärkers sind die zweiten Seitenflächen des Verstärkungsmediums optisch poliert und die ersten Seitenflächen verlaufen unter einem Winkel ≠ 90° zu den Hauptflächen, die wiederum nicht optisch poliert sondern vorzugsweise aufgeraut oder geschliffen sind. Üblicherweise sind derartige plattenförmige Verstärkermedien nach dem Stand der Technik nur an den ersten Seitenflächen für den Ein- und Austritt der Pumpstrahlung sowie der verstärkten Laserstrahlung poliert und an den zweiten Seitenflächen matt geschliffen, um parasitäre Oszillationen innerhalb des Verstärkungsmediums, sog. Galeriemoden, zu unterdrücken. In der vorgeschlagenen Ausgestaltung werden jedoch auch die zweiten Seitenflächen optisch poliert, um über Wellenleitung bzw. Reflexion eine möglichst gleichmäßige Verteilung der Pumpenlaserstrahlung über die Breite des Verstärkungsmediums sowie über eine größere Tiefe des Verstärkungsmediums zu erreichen. Durch diese polierten zweiten Seitenflächen könnten sich jedoch Galeriemoden ausbilden, die dann durch die Verkippung der ersten Seitenflächen vermieden werden. Auf diese Weise kann eine symmetrische Ausleuchtung beim Pumpen des Verstärkungsmediums von einer oder beiden Seiten ohne Ausbildung derartiger störender Galeriemoden erreicht werden.

Die Pumplasereinheiten sind bezüglich der jeweiligen ersten Seitenfläche vorzugsweise so angeordnet bzw. ausgerichtet, dass die Pumplaserstrahlen jeweils paarweise symmetrisch auf die erste Seitenfläche auftreffen. Darunter ist zu verstehen, dass in der durch die Pumplaserstrahlen aufgespannten Einfallsebene die Senkrechte auf die erste Seitenfläche auch die Winkelhalbierende von jeweils zwei der Pumplaserstrahlen bildet. Vorzugsweise wird dabei pro erste Seitenfläche eine geradzahlige Anzahl von Pumplasereinheiten eingesetzt. Eine ungerade Anzahl Pumplasereinheiten ist aber ebenfalls denkbar, da eine paarweise symmetrische Anordnung zu einem Pumpmodul, dessen Hauptachse senkrecht zur ersten Seitenfläche ist, mit sich selbst zusammenfällt. Beim Pumpen durch beide ersten Seitenflächen wird dabei vorzugsweise die Anordnung der Pumplasereinheiten auf der einen Seite des Verstärkungsmediums spiegelsymmetrisch zur Anordnung der Pumplasereinheiten auf der anderen Seite des Verstärkungsmediums gewählt, so dass auch beide Seiten symmetrisch zueinander gepumpt werden. Dies führt zu einer gleichmäßigen Verteilung der Pumplaserstrahlung im Verstärkungsmedium. Bei gleicher Anzahl an Pumplasereinheiten auf beiden Seiten des Verstärkungsmediums sind vorzugsweise die Pumplaserleistungen der einzelnen Pumplasereinheiten gleich. Es können jedoch auch unterschiedliche Pumplaserleistungen für die einzelnen Pumplasereinheiten eingesetzt werden, insbesondere bei ungleicher Anzahl an Pumplasereinheiten auf beiden Seiten des Verstärkungsmediums.

Grundsätzlich kann der vorgeschlagene Verstärker so aufgebaut sein, dass der zu verstärkende Laserstrahl lediglich einmalig durch das Verstärkungsmedium läuft. Bevorzugt wird jedoch eine gefaltete Anordnung genutzt, bei der der zu verstärkende Laserstrahl mehrfach über einen oder mehrere Spiegel durch das Verstärkungsmedium gelenkt wird. Unter dem optischen Verstärker ist dabei in der vorliegenden Patentanmeldung auch ein LaserOszillator mit einem entsprechenden Verstärkungsmedium bzw. Laserkristall zu verstehen.

Der vorgeschlagene optische Verstärker eignet sich besonders zur Realisierung gütegeschalteter Oszillatoren mit kurzen ns-Pulsdauern sowie für die Verstärkung gepulster Laserstrahlung auf hohe mittlere Leistungen bei nahe beugungsbegrenzter Strahlqualität. Die mittlere Ausgangsleistung lässt sich über die Breite bzw. das Aspektverhältnis des gepumpten Volumens nahezu beliebig in den kW-Bereich skalieren.

### Kurze Beschreibung der Zeichnungen

Der vorgeschlagene optisch gepumpte Verstärker wird nachfolgend anhand von Ausführungsbeispielen in Verbindung mit den Zeichnungen nochmals näher erläutert. Hierbei zeigen:
- Fig. 1: ein Beispiel für einen optisch gepumpten Verstärker des Standes der Technik;
- Fig. 2: ein erstes Beispiel für einen optisch gepumpten Verstärker gemäß der vorliegenden Erfindung;
- Fig. 3: ein zweites Beispiel für einen optisch gepumpten Verstärker gemäß der vorliegenden Erfindung;
- Fig. 4: eine Darstellung der Verteilung der Pumplaserstrahlung im Verstärkungsmedium beim Blick durch eine der Hauptflächen;
- Fig. 5: ein Beispiel für die Verkippung der ersten Seitenflächen des Verstärkungsmediums bei einer Ausgestaltung des vorgeschlagenen Verstärkers,
- Fig. 6a: ein Beispiel für den Strahlengang des zu verstärkenden Laserstrahls durch das Verstärkungsmedium in Draufsicht auf die Hauptfläche des Verstärkungsmediums;
- Fig. 6b: das Beispiel der Fig. 6a in Seitenansicht; und
- Fig. 7: ein weiteres Beispiel für den Strahlengang des zu verstärkenden Laserstrahls durch das Verstärkungsmedium in Draufsicht auf die Hauptfläche des Verstärkungsmediums.

### Wege zur Ausführung der Erfindung

Die aus dem Stand der Technik bekannten Pumpanordnungen für optisch endgepumpte Verstärker wurden bereits in Zusammenhang mit der Figur 1 in der Beschreibungseinleitung erläutert. Figur 2 zeigt nun ein Beispiel für einen optisch endgepumpten Verstärker gemäß der vorliegenden Erfindung. Die in Figur 2 gezeigte Anordnung zeigt einen Slab-Kristall 7 als Verstärkungsmedium zwischen zwei Resonatorspiegeln 5. Der zu verstärkende Laserstrahl 8 wird durch diese Spiegel zweifach gefaltet, so dass er den Slab-Kristall 7 insgesamt dreimal durchläuft. Im vorliegenden Beispiel werden für jede Seite des Slab-Kristalls 7 zwei Pumpmodule 9 eingesetzt, die jeweils symmetrisch bezüglich der jeweiligen Seitenfläche und auch spiegelsymmetrisch zueinander angeordnet sind. Jedes Pumpmodul weist einen Laserdioden-Barren 10, eine vorgeschaltete Fokussieroptik 2 zur Einkopplung in einen Homogenisator 3, d.h. hier einen für die Homogenisierung der Pumplaserstrahlung geeigneten Wellenleiter, einen Umlenkspiegel 11 sowie eine Pumpoptik 4 auf. Durch das winkelüberlagerte Pumpen des Slab-Kristalls 7 treffen die jeweiligen Strahlenbündel der Pumplaserstrahlung 12 an den Spiegeln 5 vorbei auf die jeweiligen Seitenflächen des Slab-Kristalls 7, so dass keine dichroitischen Pumpspiegel erforderlich sind. Durch Pumpen der jeweiligen Seitenfläche durch zwei getrennte, winkelüberlagerte Pumplaserstrahlenbündel 12, die in der Figur 2 als Linien entsprechend den Hauptachsen 20 der Strahlenbündel angedeutet sind, muss für die einzelnen Pumpmodule 9 eine geringere numerische Apertur erreicht werden als beim Pumpen mit nur einem Pumpmodul pro Seitenfläche gemäß dem Stand der Technik. Damit verringert sich die Anzahl der optischen Elemente, insbesondere der Linsen, im jeweiligen Pumpmodul gegenüber dem Stand der Technik. Die Pumpmodule 9 und somit die gesamte Pumpanordnung können damit auch kompakter ausgeführt werden. Selbstverständlich kann die Anzahl der Pumpmodule 9 pro Seitenfläche auch erhöht werden.

Bei einer beispielhaften Breite des Slab-Kristalls 7 von 10-40mm können bspw. die folgenden Parameter bzw. Dimensionen für die Pumpmodule verwendet werden:
- Höhe der gepumpten Linie 0,2-2mm
- Pumpleistung pro Modul 100-1000W
- Maximale Linsendurchmesser in den Pumpmodulen 1-5x Slabbreite, typisch 2-3x
- Baulänge der einzelnen Pumpmodule 10-30x Slabbreite

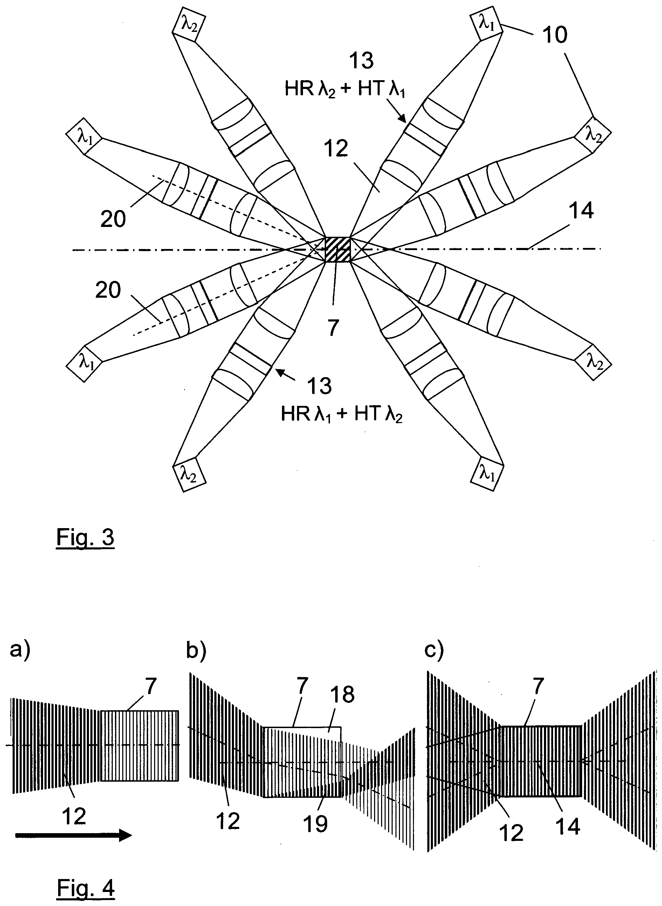

Figur 3 zeigt ein weiteres Beispiel einer Pumpanordnung gemäß der vorliegenden Erfindung. In diesem Beispiel ist lediglich das Verstärkungsmedium 6 mit den einzelnen Pumpmodulen 9 dargestellt. Hierbei werden vier Pumpmodule 9 je zu pumpender Seitenfläche des Verstärkungsmediums 6 eingesetzt. Auf jeder Seite sind diese Pumpmodule 9 paarweise symmetrisch angeordnet. Die Pumpmodule der linken Seite sind wiederum spiegelsymmetrisch zu den Pumpmodulen der rechten Seite angeordnet, wie dies aus der Figur 3 zu erkennen ist. In diesem Beispiel werden Laserdioden-Barren 10 als Pumplaserquellen eingesetzt, die bei unterschiedlichen Wellenlängen λ1, λ2 emittieren. Dies ist in der Figur ebenfalls angedeutet. Hierbei erfolgt eine Wellenlängenüberlagerung im Verstärkungsmedium 6. Auf diese Weise kann die Pumpleistungsdichte und/oder die im Verstärkungsmedium deponierte Energie erhöht werden. Die Laserdioden-Barren 10 können auch aus jeweils zwei polarisationsgekoppelten Laserdioden bestehen. Im Beispiel der Figur 3 wird zusätzlich noch eine sog. Pumplichtrückfaltung realisiert, bei der ein durch das Verstärkungsmedium hindurch getretener und nicht absorbierter Anteil der Pumplaserstrahlung über einen Spiegel nochmals durch das Verstärkungsmedium geleitet wird. Hierzu sind jeweils Pumpmodule unterschiedlicher Wellenlängen in Strahlrichtung der Pumplaserstrahlung gegenüberliegend angeordnet, wie dies in der Figur dargestellt ist. Dadurch können in den jeweiligen Strahlengängen dichroitische Spiegel 13 eingesetzt werden, die für die Wellenlänge der Pumplaserstrahlung des jeweiligen Pumpmoduls durchlässig, für die Wellenlänge des von der gegenüberliegenden Seite durch das Verstärkungsmedium hindurch getretenen Pumplaserstrahls jedoch hochreflektierend ist.

Für das winkelüberlagerte Pumpen des vorgeschlagenen Verstärkers sollte eine Wellenleitung der Pumplaserstrahlung in Slow-Richtung im Verstärkungsmedium ermöglicht werden. Dies erfordert optisch polierte zweite Seitenflächen des Verstärkungsmediums. Zur Vermeidung von Galeriemoden sollten dann die ersten Seitenflächen gegenüber einer senkrechten Ausrichtung zu den Hauptflächen verkippt und diese Hauptflächen nicht poliert, d.h. z.B. aufgeraut oder geschliffen sein. Für eine gleichmäßige Verteilung der Pumplaserstrahlung im Verstärkungsmedium sollte zudem eine symmetrische Anordnung der Pumpmodule bezüglich der jeweiligen Seitenfläche gewählt werden.

Bei den bisher realisierten Pumpanordnungen für Innoslab-Laser wird die Pumpstrahlung auf der optischen Achse 14 des Lasers bzw. Verstärkers, wie sie in der Figur 3 angedeutet ist, und mit kleiner numerischer Apertur durch die ersten Seitenflächen eingestrahlt. Außerdem ist der Slab-Kristall in der Regel so hoch dotiert, dass die Pumplaserstrahlung 12 schon im vorderen Bereich des Laserkristalls absorbiert wird, wie in der Figur 4a im Blick durch eine der Hauptflächen des Slab-Kristalls 7 schematisch dargestellt ist. Daher werden die vier verbleibenden Seitenflächen des Slab-Kristalls, d. h. die beiden Hauptflächen sowie die beiden zweiten Seitenflächen, matt geschliffen und nur die zwei ersten Seitenflächen optisch poliert. Dadurch werden parasitäre Oszillationen innerhalb des Laserkristalls (Galeriemoden) unterdrückt.

Beim vorliegenden optisch endgepumpten Verstärker wird das Verstärkungsmedium vorzugsweise auch an den beiden zweiten Seitenflächen optisch poliert. Der Grund hierfür wird anhand der Figur 4 erläutert. Fällt die Pumplichtstrahlung 12 unter einem Winkel zur optischen Achse auf die erste Seitenfläche bzw. Facette des Slab-Kristalls 7, so bilden sich Schattenbereiche 18 innerhalb des Slab-kristalls aus. Dies ist in der Figur 4b dargestellt. Der Slab-Kristall wird dadurch ungleichmäßig über die Breite gepumpt. Dies führt bei Innoslab-Lasern zu einer Verschlechterung der Strahleigenschaften und sollte vermieden werden. Durch Polieren auch der zweiten Seitenflächen des Slab-Kristalls werden diese ebenfalls als optische Flächen ausgeführt, so dass die Pumpstrahlung 12 in Slow-Richtung im Slab-Kristall 7 als Wellenleiter geführt wird. Dadurch entsteht zunächst ein Überlagerungsbereich 19, in dem eine doppelt so große Pumplichtleistung absorbiert wird. Der Überlagerungsbereich 19 ist ebenfalls in der Figur 4b dargestellt. Ordnet man nun paarweise Pumpmodule symmetrisch um die optische Achse 14 des Lasers bzw. Verstärkers an, so wird eine gleichmäßige Pumplichtabsorption über die Breite des Slab-Kristalls 7 erreicht, wie in der Figur 4c zu erkennen ist. Die Figuren 4a-c zeigen jeweils die Draufsicht auf eine der Hauptflächen des Slab-Kristalls 7.

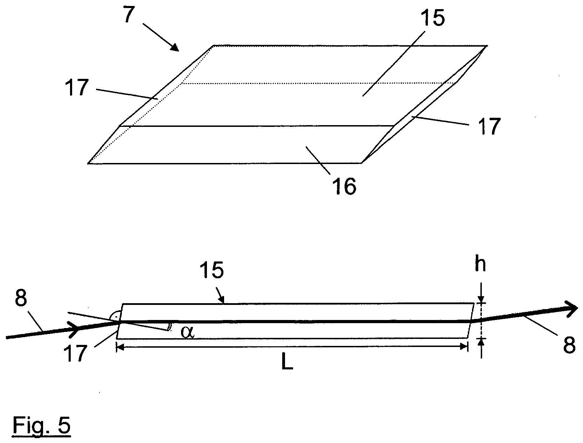

Durch die optisch polierten zweiten Seitenflächen des Slab-Kristalls, die für die Wellenleitung der Pumpstrahlung benötigt werden, können sich allerdings Galeriemoden ausbilden, die einen Laserbetrieb unmöglich machen. Um dies zu verhindern, müssen zusätzlich die ersten Seitenflächen bzw. Eintrittsfacetten des Slab-Kristalls 7 so stark verkippt werden, dass sich keine unerwünschte Mode ausbilden kann, ohne die beiden großen Hauptflächen mit einzubeziehen, die auch der Wärmeabfuhr dienen. Dies ist in der Figur 5 dargestellt, die im oberen Teil in perspektivischer Darstellung den Slab-Kristall 7 mit einer der geschliffenen Hauptflächen 15 und einer polierten zweiten Seitenfläche 16 sowie den beiden ersten Seitenflächen 17 zeigt. Im unteren Teil ist ein Querschnitt durch diesen Slab-Kristall 7 senkrecht zu den Hauptflächen 15 und ersten Seitenflächen 17 dargestellt, der den Verkippungswinkel α der beiden ersten Seitenflächen 17 zeigt. Der Verkippungswinkel α ist in diesem Querschnitt der Winkel zwischen der Flächennormalen auf die erste Seitenfläche 17 und einer der Hauptflächen 15. Durch die Streuung an der geschliffenen rauen Oberfläche der beiden Hauptflächen 15 wird das Anschwingen der unerwünschten Moden unterdrückt. Damit sich keine Galeriemoden ausbilden können, die nur über die optisch polierten ersten Seitenflächen 17 und die für die Wellenleitung des Pumplichts benötigten optisch polierten zweiten Seitenflächen 16 laufen, sondern auch die geschliffenen Hauptflächen 15 für die Wärmeabfuhr in die Galeriemoden einbezogen werden, muss der Verkippungswinkel α >∼ arctan(h/L) sein, wobei L der Länge des Slab-Kristalls in Richtung der optischen Achse und h der Höhe, d.h. des Abstandes der beiden Hauptflächen 15, entsprechen. Dann ergibt sich z.B. α = 6° für h = 1mm und L = 10mm. Im Falle von 3- bzw. quasi 3-Niveau-Laserkristallen wie Yb:YAG kann der Verkippungswinkel α auch kleiner sein. In diesem Fall wird ausgenutzt, dass nur der zentrale Bereich des Slab-Kristalls gepumpt wird und das umgebene, nicht gepumpte Lasermaterial die Laserstrahlung absorbiert. Ist die Weglänge möglicher Galeriemoden durch ungepumpte Bereiche so groß, dass die Absorption in diesen Bereichen größer ist als die Verstärkung im gepumpten Bereich, werden Galeriemoden ebenfalls unterdrückt.

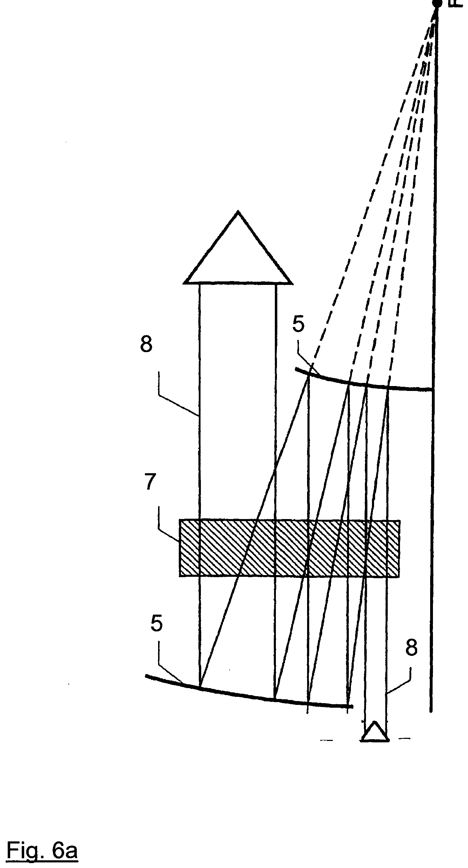

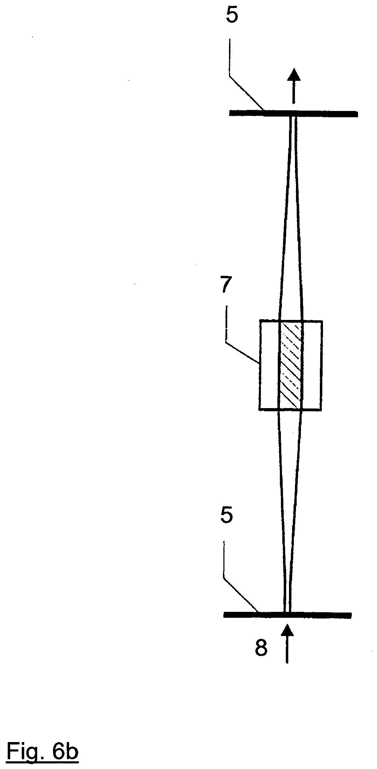

Ein beispielhafter Strahlverlauf der zu verstärkenden Laserstrahlung 8 zwischen den Resonatorspiegeln 5 ist in der Figur 3 angedeutet. Die Figur 6a zeigt ein weiteres Beispiel in Draufsicht auf die Hauptfläche des Slab-Kristalls 7 als Verstärkungsmedium, bei dem der Laserstrahl auf einer Zickzack-Linie unter Strahlaufweitung in der Ebene parallel zu den Hauptflächen zwischen den Resonatorspiegeln 5 propagiert. Durch die Strahlaufweitung wird bei der Verstärkung eine annähernd gleichbleibende Leistungsdichte erreicht. Die beiden Resonatorspiegel sind bei dieser Anordnung so ausgelegt und angeordnet, dass sie eine Art Hybridresonator bilden, der in der Ebene parallel zu den Hauptflächen des Slab-Kristalls 7 instabil und in der dazu senkrechten Ebene stabil ist. Hierzu werden im vorliegenden Beispiel zylindrische Resonatorspiegel 5 verwendet, deren Foki gemeinsam auf einem Punkt F außerhalb des Resonators liegen. Der Eingangsstrahl wird off-axis in den Resonator eingekoppelt, wie in der Figur 6a zu erkennen ist. Fig. 6b zeigt die Verhältnisse in Seitenansicht (Draufsicht auf die zweite Seitenfläche des Slab-Kristalls). Die Anordnung der Resonatorspiegel 5 ist so gewählt, dass unter Berücksichtigung der thermischen Linsenwirkung des Slab-Kristalls 7 jeweils eine Strahltaille an den Resonatorspiegeln 5 auftritt.

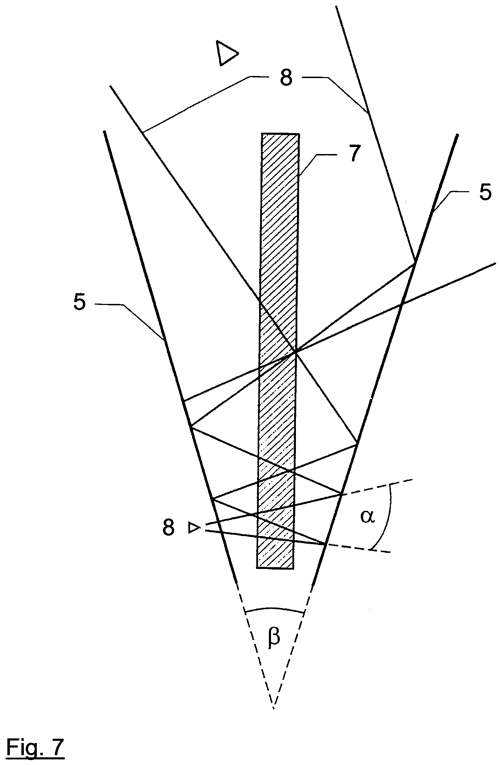

Eine besonders einfache Resonatoranordnung ist in Fig. 7 in Draufsicht auf die Hauptfläche des Slab-Kristalls 7 dargestellt. Bei dieser Ausgestaltung werden zwei plane Resonatorspiegel 5 verwendet, die unter einem Winkel β zueinander angeordnet werden, der etwa dem Volldivergenzwinkel des zu verstärkenden Laserstrahls 8 entspricht. Die Pumpmodule sind in den Figuren 6 und 7 nicht dargestellt.

Die oben dargestellten Anordnungen stellen selbstverständlich lediglich Beispiele dar. So ist die symmetrische Anordnung (spiegelsymmetrisch zur optischen Achse) in Figur 3 zwar vorteilhaft aber nicht zwingend für die Funktion des vorgeschlagenen optischen Verstärkers erforderlich. Im Falle von Verstärkermaterialien, die im ungepumpten Zustand die zu verstärkende Laserstrahlung absorbieren, kann die Verkippung der ersten Seitenflächen in der bevorzugten Ausgestaltung des vorgeschlagenen Verstärkers auch kleiner ausfallen als beschrieben. Jedes Pumpmodul mit geometrisch von den anderen Pumpmodulen getrenntem Strahlengang regt das Verstärkungsmedium in Slow-Richtung vorzugsweise über die gesamte oder nahezu gesamte Breite des Verstärkungsmediums an. Damit wird der geometrisch getrennte Strahlengang der Pumpmodule am Ort des Verstärkungsmediums über den Winkel räumlich überlagert. Ein Aneinandersetzen von Strahlquerschnitten bzw. Pumplinien findet dabei nicht statt.

### Bezugszeichenliste

- 1: Pumplichtquelle
- 2: Fokussieroptik
- 3: Homogenisator
- 4: Pumpoptik
- 5: Resonatorspiegel
- 6: Verstärkungsmedium
- 7: Slab-Kristall
- 8: Laserstrahl
- 9: Pumplasereinheit/Pumpmodul
- 10: Laserdioden-Barren
- 11: Umlenkspiegel
- 12: Pumplaserstrahlung
- 13: dichroitischer Spiegel
- 14: optische Achse
- 15: Hauptfläche
- 16: zweite Seitenflächen
- 17: erste Seitenflächen
- 18: Schattenbereich
- 19: Überlagerungsbereich
- 20: Hauptachse

## Patentansprüche

1. Optisch gepumpter Verstärker und/oder Oszillator, der ein plattenförmiges optisches Verstärkungsmedium (6, 7), das durch zwei sich gegenüberliegende Hauptflächen (15) und jeweils zwei sich gegenüberliegende erste (17) und zweite Seitenflächen (16) begrenzt ist, und mehrere Pumplasereinheiten (9) zum optischen Pumpen des Verstärkungsmediums (6, 7) durch mindestens eine der ersten Seitenflächen (17) aufweist, durch die ein zu verstärkender Laserstrahl durch das Verstärkungsmedium (6, 7) propagiert,
wobei die Pumplasereinheiten (9) Pumplaserstrahlung (12) als Strahlenbündel auf die mindestens eine erste Seitenfläche (17) richten und so ausgebildet sind, dass die von den Pumplasereinheiten (9) emittierte Pumplaserstrahlung (12) beim Durchtritt durch das Verstärkungsmedium (6, 7) einen langgestreckten Strahlquerschnitt mit einer kurzen und einer parallel zu den Hauptflächen (15) verlaufenden langen Achse aufweist und bezüglich der kurzen Achse nicht wie in einem Wellenleiter geführt frei
durch das Verstärkungsmedium (6, 7) propagiert, ohne die Hauptflächen (15) zu tangieren, und die Pumplasereinheiten (9) so angeordnet sind, dass jeweils die Strahlenbündel mehrerer Pumplasereinheiten (9) auf geometrisch getrennten Strahlengängen mit ihren Hauptachsen (20) in einer Ebene senkrecht zur kurzen Achse unter einem Winkel zueinander auf eine der ersten Seitenflächen (17) oder auf beide erste Seitenflächen (17) auftreffen und sich die Strahlquerschnitte der Strahlenbündel jeweils auf der oder den ersten Seitenflächen (17) und im Verstärkungsmedium überlagern.

2. Optisch gepumpter Verstärker und/oder Oszillator nach Anspruch 1,
**dadurch gekennzeichnet,**
**dass** die zweiten Seitenflächen (16) optisch poliert sind und die ersten Seitenflächen (17) unter einem Winkel ≠ 90° zu den Hauptflächen (15) verlaufen.

3. Optisch gepumpter Verstärker und/oder Oszillator nach Anspruch 1 oder 2,
**dadurch gekennzeichnet,**
**dass** das Verstärkungsmedium (6, 7) zwischen mindestens zwei Spiegeln (5) angeordnet ist, die den zu verstärkenden Laserstrahl mehrfach durch das Verstärkungsmedium (6, 7) lenken.

4. Optisch gepumpter Verstärker und/oder Oszillator nach Anspruch 3,
**dadurch gekennzeichnet,**
**dass** die mindestens zwei Spiegel (5) den zu verstärkenden Laserstrahl unter Strahlaufweitung auf einer Zickzack-Linie durch das Verstärkungsmedium (6, 7) lenken.

5. Optisch gepumpter Verstärker und/oder Oszillator nach Anspruch 3 oder 4,
**dadurch gekennzeichnet,**
**dass** die Pumplasereinheiten (9) so angeordnet sind, dass sie die Pumplaserstrahlung (12) an den Spiegeln (5) vorbei auf die jeweilige erste Seitenfläche (17) richten.

6. Optisch gepumpter Verstärker und/oder Oszillator nach einem der Ansprüche 1 bis 5,
**dadurch gekennzeichnet,**
**dass** die Pumplasereinheiten (9) so angeordnet sind, dass sie die Strahlenbündel in einer von den Hauptachsen (20) aufgespannten Ebene symmetrisch auf die jeweilige erste Seitenfläche (17) richten.

7. Optisch gepumpter Verstärker und/oder Oszillator nach einem der Ansprüche 1 bis 6,
**dadurch gekennzeichnet,**
**dass** jede der ersten Seitenflächen (17) des Verstärkungsmediums (6, 7) von der gleichen Anzahl an Pumplasereinheiten (9) gepumpt wird, wobei die Pumplasereinheiten (9) auf der einen Seite des Verstärkungsmediums (6, 7) spiegelsymmetrisch zu den Pumplasereinheiten (9) auf der anderen Seite des Verstärkungsmediums (6, 7) angeordnet sind.

8. Optisch gepumpter Verstärker und/oder Oszillator nach einem der Ansprüche 1 bis 7,
**dadurch gekennzeichnet,**
**dass** wenigstens zwei der Pumplasereinheiten (9) Pumplaserstrahlung (12) mit voneinander verschiedenen Wellenlängen emittieren.

9. Optisch gepumpter Verstärker und/oder Oszillator nach Anspruch 7,
**dadurch gekennzeichnet,**
**dass** jeweils sich in Pumplaserstrahlrichtung am Verstärkungsmedium (6, 7) gegenüberliegende Pumplasereinheiten (9) Pumplaserstrahlung (12) mit voneinander verschiedenen Wellenlängen emittieren.

10. Optisch gepumpter Verstärker und/oder Oszillator nach Anspruch 9,
**dadurch gekennzeichnet,**
**dass** jeweils ein dichroitischer Spiegel (13) so im Strahlengang der Pumplaserstrahlung (12) der sich gegenüberliegenden Pumplasereinheiten (9) angeordnet ist, dass er durch das Verstärkungsmedium (6, 7) propagierte Pumplaserstrahlung (12) der jeweils gegenüberliegenden Pumplasereinheit (9) in das Verstärkungsmedium (6, 7) zurück reflektiert.

11. Optisch gepumpter Verstärker und/oder Oszillator nach einem der Ansprüche 1 bis 10,
**dadurch gekennzeichnet,**
**dass** die Pumplasereinheiten (9) als Pumplaserquellen einzelne oder polarisationsgekoppelte Laserdioden-Barren oder Stapel aus Laserdioden-Barren aufweisen die entlang der langen und/oder kurzen Achse gestapelt sind.

## Claims

1. An optically pumped amplifier and/or oscillator, which has a plate-shaped optical gain medium (6, 7), which is delimited by two mutually opposite main surfaces (15) and two mutually opposite first (17) and second side surfaces (16) in each case, and a plurality of pump laser units (9) for optically pumping the gain medium (6, 7) through at least one of the first side surfaces (17), via which a laser beam to be amplified propagates through the gain medium (6, 7),
wherein the pump laser units (9) direct pump laser radiation (12) onto the at least one first side surface (17) as beam bundles and are designed such that the pump laser radiation (12) emitted by the pump laser units (9), upon passing through the gain medium (6, 7), has an elongated beam cross section having a short axis and a long axis running parallel to the main surfaces (15) and propagates, not guided as in a waveguide, freely through the gain medium (6, 7) with respect to the short axis, without touching the main surfaces, and the pump laser units (9) are arranged such that in each case, the main axes (20) of the beam bundles of a plurality of pump laser units (9) impinge on geometrically separate beam paths on one of the first side surfaces (17) or on both first side surfaces (17) in a plane perpendicular to the short axis at an angle to one another, and the beam cross sections of the beam bundles are in each case superimposed on one another on the first side surface(s) (17) and in the gain medium.

2. The optically pumped amplifier and/or oscillator according to Claim 1,
**characterised in that** the second side surfaces (16) are optically polished and the first side surfaces (17) run at an angle ≠ 90° to the main surfaces (15).

3. The optically pumped amplifier and/or oscillator according to Claim 1 or 2,
**characterised in that** the gain medium (6, 7) is arranged between at least two mirrors (5), which deflect the laser beam to be amplified multiple times through the gain medium (6, 7).

4. The optically pumped amplifier and/or oscillator according to Claim 3,
**characterised in that** the at least two mirrors (5) deflect the laser beam to be amplified with beam expansion on a zig-zag line through the gain medium (6, 7).

5. The optically pumped amplifier and/or oscillator according to Claim 3 or 4,
**characterised in that** the pump laser units (9) are arranged such that they direct the pump laser radiation (12) past the mirrors (5) onto the respective first side surface (17).

6. The optically pumped amplifier and/or oscillator according to one of Claims 1 to 5,
**characterised in that** the pump laser units (9) are arranged such that they direct the beam bundles symmetrically onto the respective first side surface (17) in a plane spanned by the principal axes (20).

7. The optically pumped amplifier and/or oscillator according to one of Claims 1 to 6,
**characterised in that** each of the first side surfaces (17) of the gain medium (6, 7) is pumped by the same number of pump laser units (9), wherein the pump laser units (9) are arranged on the one side of the gain medium (6, 7) mirror symmetrically to the pump laser units (9) on the other side of the gain medium (6, 7).

8. The optically pumped amplifier and/or oscillator according to one of Claims 1 to 7,
**characterised in that** at least two of the pump laser units (9) emit pump laser radiation (12) with wavelengths that are different from one another.

9. The optically pumped amplifier and/or oscillator according to Claim 7,
**characterised in that** pump laser units (9) in each case opposite one another on the gain medium (6, 7) in the pump laser beam direction emit pump laser radiation (12) with wavelengths that are different from one another.

10. The optically pumped amplifier and/or oscillator according to Claim 9,
**characterised in that** in each case, a dichroitic mirror (13) is arranged in the beam path of the pump laser radiation (12) of the mutually opposite pump laser units (9) such that it reflects pump laser radiation (12) of the respective opposite pump laser unit (9) propagated through the gain medium (6, 7) back into the gain medium (6, 7).

11. The optically pumped amplifier and/or oscillator according to one of Claims 1 to 10,
**characterised in that** the pump laser units (9) as pump laser sources have individual or polarisation-coupled laser diode bars or stacks made up of laser diode bars stacked along the long and/or short axis.

## Revendications

1. Amplificateur et/ou oscillateur à pompage optique, qui présente un milieu d'amplification optique en forme de plaque (6, 7), qui est délimité par deux surfaces principales opposées (15) et deux première (17) et seconde (16) surfaces latérales opposées, et plusieurs unités de pompage laser (9) pour pomper optiquement le milieu d'amplification (6, 7) par au moins une des premières surfaces latérales (17), à travers lesquelles un faisceau laser à amplifier se propage à travers le milieu d'amplification (6, 7), dans lequel les unités laser de pompage (9) alignent le rayonnement (12) sous forme de faisceau sur au moins une première surface latérale (17) et sont conçues de telle sorte que le rayonnement laser de pompage (12) émis par les unités laser de pompe (9) lors de son passage à travers le milieu d'amplification (6, 7) présente une section transversale allongée du faisceau avec un axe court et s'étendant parallèlement aux surfaces principales (15) et se propage par rapport à l'axe court comme étant non guidé dans un guide d'onde librement à travers le milieu d'amplification (6, 7), sans affecter les surfaces principales (15),
et les unités laser de pompage (9) sont agencées de telle sorte que les faisceaux de plusieurs unités laser de pompage (9) sur des trajets de faisceau géométriquement séparés butent avec leurs axes principaux (20) sur une des premières surfaces latérales (17) ou sur les deux premières surfaces latérales (17) et les sections transversales du faisceau se chevauchent sur la ou les premières surfaces latérales (17) et dans le milieu d'amplification.

2. Amplificateur et/ou oscillateur à pompage optique selon la revendication 1, **caractérisé en ce que** les secondes surfaces latérales (16) sont polies optiquement et les premières surfaces latérales (17) s'étendent à un angle de ≠ 90° par rapport aux surfaces principales (15).

3. Amplificateur et/ou oscillateur à pompage optique selon la revendication 1 ou 2, **caractérisé en ce que** le milieu d'amplification (6, 7) est disposé entre au moins deux miroirs (5) qui guident plusieurs fois le faisceau laser à amplifier à travers le milieu d'amplification (6, 7).

4. Amplificateur et/ou oscillateur à pompage optique selon la revendication 3, **caractérisé en ce que** les au moins deux miroirs (5) guident le faisceau laser à amplifier par élargissement du faisceau sur une ligne en zigzag à travers le milieu d'amplification (6, 7).

5. Amplificateur et/ou oscillateur à pompage optique selon la revendication 3 ou 4, **caractérisé en ce que** les unités laser de pompage (9) sont agencées de cette manière telle qu'elles dirigent le rayonnement laser de la pompe (12) devant les miroirs (5) sur la première surface latérale respective (17).

6. Amplificateur et/ou oscillateur à pompage optique selon une des revendications 1 à 5, **caractérisé en ce que** les unités laser de pompage (9) sont agencées de manière à aligner symétriquement les faisceaux dans un plan enjambé par les axes principaux (20) sur la première surface latérale respective (17).

7. Amplificateur et/ou oscillateur à pompage optique selon une des revendications 1 à 6, **caractérisé en ce que** que chacune des premières surfaces latérales (17) du milieu d'amplification (6, 7) est pompée par le même nombre d'unités de pompage laser (9), dans lequel les unités de pompage laser (9) sont disposées symétriquement d'un côté du milieu d'amplification (6, 7) par rapport aux unités laser de pompage (9) sur l'autre côté du milieu d'amplification (6, 7).

8. Amplificateur et/ou oscillateur à pompage optique selon une des revendications 1 à 7, **caractérisé en ce qu'**au moins deux des unités laser de pompage (9) pompent le rayonnement laser (12) avec des longueurs d'onde différentes l'une de l'autre.

9. Amplificateur et/ou oscillateur à pompage optique selon la revendication 7, **caractérisé en ce que** les unités laser de pompage (9) opposées les unes aux autres dans la direction du faisceau laser de pompage sur le milieu d'amplification (6, 7) émettent un rayonnement laser de pompage (12) avec des longueurs d'onde différentes.

10. Amplificateur et/ou oscillateur à pompage optique selon la revendication 9, **caractérisé en ce que** un miroir dichroïque (13) est respectivement disposé dans le trajet du faisceau du rayonnement laser de pompage (12) des unités laser de pompage opposées (9), de telle sorte que le rayonnement laser de pompage (12) propagé par le milieu d'amplification (6, 7) de l'unité laser de pompage opposée (9) soit rétro réfléchi dans le milieu d'amplification (6, 7).

11. Amplificateur et/ou oscillateur à pompage optique selon une des revendications 1 à 10, **caractérisé en ce que** les unités laser de pompage (9) en tant que sources laser de pompage présentent des barres de diodes laser ou des piles de barres de diodes laser simples ou couplées à la polarisation qui sont empilées le long de l'axe long et/ou court.
